(19) Europäisches Patentamt
European Patent Office
Office européen des brevets

(11) **EP 3 147 825 A1**

(12) **EUROPEAN PATENT APPLICATION**
published in accordance with Art. 153(4) EPC

(43) Date of publication:
**29.03.2017 Bulletin 2017/13**

(51) Int Cl.:
***G06K 9/20*** *(2006.01)*

(21) Application number: **15893172.5**

(22) Date of filing: **25.12.2015**

(86) International application number:
**PCT/CN2015/098836**

(87) International publication number:
**WO 2016/188104 (01.12.2016 Gazette 2016/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.11.2015 CN 201510771802**

(71) Applicant: **China Construction Bank Corporation
Beijing 100033 (CN)**

(72) Inventors:
• LIU, Yongbo
  **Beijing 100033 (CN)**
• LI, Guilin
  **Beijing 100033 (CN)**
• FANG, Hongtao
  **Beijing 100033 (CN)**

(74) Representative: **Boult Wade Tennant
Verulam Gardens
70 Gray's Inn Road
London WC1X 8BT (GB)**

(54) **INFORMATION PROCESSING METHOD AND INFORMATION PROCESSING DEVICE**

(57) The present disclosure discloses an information processing method which firstly determines the position area of each column in the form respectively (S11), respectively determines the position area of the positioning elements of each column in the form (S12), determines the number of elements contained in each column of the form (S13), respectively determines the position area of each element in the form according to the above information(S 14), obtains a plurality of slice images by performing the slice processing according to the position area of each element in the form (S15), performs the optical character recognition to each slice image to obtain the character string contained in the slice image (S16) and records the obtained character string according to a preset rule (S17). The elements in the form may be acquired and the error rate of data may be reduced.

FIG. 1

**Description**

<u>FIELD</u>

The present disclosure pertains to the technical field of text recognition, particularly relating to an information processing method and an information processing device.

<u>BACKGROUND</u>

In daily banking business, it needs to process a large amount of forms. Currently, the stuff needs to enter a large amount of list-type information manually during the electronic processing to paper materials, for example housing fund remittance inventory during the process of collecting housing fund.

The list-type information has the following features: 1. the data size of bills is large; 2. in the bills, the data type or content of each element located in the same column is the same, whereas the data type and content of each element located in the same row are different; 3. in the bills, a pixel height of each element located in the same row is the same, and a pixel width of each element located in the same column is the same. The element in the bill refers to a character or a character string located in one cell, or the element may be understood as a piece of data, for example a user name, date, currency amount.

The staff tends to have to frequently switch an input method and adjust an operating area of his or her fingers on a keyboard if entering the list-type information row by row, which operation is relatively complex. Therefore, the staff usually enters the list-type information column by column. Since the data types of the elements located in the same column are the same, and the visual effects are similar, which is highly likely to cause visual fatigue of the staff and problem such as misplaced input.

In order to reduce the labor intensity of the staff, a new processing manner is currently provided for the list-type information, specifically to intelligently identify the whole form by using a text recognition tool and obtain the data in the form to store.

However, the inventors find that the obtained data has a high error rate by adopting the above manner to intelligently identify the forms. Therefore, the problem urgent to be solved by persons skilled in the art is how to improve the method of processing forms and reduce the error rate of data.

<u>SUMMARY</u>

In view of this, the aim of the present disclosure is to provide an information processing method and an information processing device for obtaining the elements in the forms and reducing the error rate of the obtained data.

In order to realize the above purpose, the present disclosure provides the following technical solutions.

The present disclosure discloses an information processing method for processing elements in a form, the form being a digitized image, the elements in the form arranged in N columns, wherein the element is one piece of data, N is an integer greater than 1, the information processing method comprising:

respectively determining a position area of each column in the form;
respectively determining a position area of a positioning element of each column in the form, wherein the positioning element of a $n^{th}$ column is an uppermost side element among the elements necessary to be entered in the $n^{th}$ column, wherein n=1, 2, ...N;
determining a number of elements contained in each column of the form;
respectively determining a position area of each element in the form by using the position area of each column in the form, the position area of the positioning elements of each column in the form and the number of elements contained in each column;
obtaining a plurality of slice images by performing slice processing on the form according to the position area of each element in the form, wherein each slice image contains one element, a number of the slice images obtained by the slice processing being consistent with that of the elements contained in the form;
performing an optical character recognition on the slice images respectively to obtain a character string contained in the slice image;
recording the obtained character string according to a preset rule.

Optionally, in the above information processing method, the performing the optical character recognition on the slice images respectively is specifically to: perform the optical character recognition on the slice images located in the same column one by one, and then perform the optical character recognition on the slice images located in another column one by one, until the optical character recognition is performed on all the slice images located in each column;

wherein the slice images located in the $n^{th}$ column are obtained by performing the slice processing on the $n^{th}$ column of the form.

Optionally, the above information processing method further includes: displaying an element input box corresponding to a first slice image, wherein the first slice image is a slice image currently in an entering state; receiving a character string inputted by a user in the element input box; comparing the character string inputted by the user with that generated by performing the optical character recognition on the first slice image, and issuing a prompt in case of inconsistence of both.

Optionally, in the above information processing method, the method further includes: adjusting a display effect of the first slice image such that the display effect of the first slice image is different from that of other slice images, after displaying the element input box corresponding to the first slice image.

Optionally, the above information processing method further includes: receiving a zoom instruction inputted by the user, and performing a corresponding zoom processing to the first slice image in response to the zoom instruction.

Optionally, in the above information processing method, the position area of the $n^{th}$ column in the form is demarcated by a manner of (a first coordinate value, a second coordinate value, a third coordinate value, a fourth coordinate value), wherein the first coordinate value is a distance between a left side of the $n^{th}$ column and a left side of the form, the second coordinate value is a distance between a top end of the $n^{th}$ column and an upper side of the form, the third coordinate value is a distance between a right side of the $n^{th}$ column and the left side of the form, and the fourth coordinate value is a distance between a bottom end of the $n^{th}$ column and the upper side of the form.

The position area of the positioning element of the $n^{th}$ column in the form is demarcated by a manner of (a fifth coordinate value, a sixth coordinate value, a seventh coordinate value, an eighth coordinate value), wherein the fifth coordinate value is a distance between a left side of a cell where the positioning element of the $n^{th}$ column is located and the left side of the form, the sixth coordinate value is a distance between a top end of the cell where the positioning element of the $n^{th}$ column is located and the upper side of the form, the seventh coordinate value is a distance between a right side of the cell where the positioning element of the $n^{th}$ column is located and the left side of the form, and the eighth coordinate value is a distance between a bottom end of the cell where the positioning element of the $n^{th}$ column is located and the upper side of the form.

The present disclosure further discloses an information processing device for processing elements in a form, the form being a digitized image, the elements in the form arranged in N columns, wherein the element is one piece of data, N is an integer greater than 1, the information processing device including:

a column position area determining unit for respectively determining a position area of each column in the form;
a positioning element position area determining unit for respectively determining a position area of a positioning element of each column in the form, wherein the positioning element of the $n^{th}$ column is an uppermost side element among the elements necessary to be entered in the $n^{th}$ column, wherein n=1, 2, ...N;
an element number determining unit for determining a number of elements contained in each column of the form;
an element position area determining unit for respectively determining a position area of each element in the form by using the position area of each column in the form, the position area of the positioning elements of each column in the form and the number of elements contained in each column;
an image processing unit for obtaining a plurality of slice images by performing slice processing on the form according to the position area of each element in the form, wherein each slice image contains one element, a number of the slice images obtained by the slice processing being consistent with that of the elements contained in the form;
a character recognizing unit for performing an optical character recognition on the slice images respectively to obtain a character string contained in the slice image;
a storing unit for recording the obtained character string according to a preset rule.

Optionally, in the above information processing device, the character recognizing unit is specifically used to perform the optical character recognition on the slice images located in the same column one by one, and then perform the optical character recognition on the slice images located in another column one by one, until the optical character recognition is performed on all the slice images located in each column; wherein the slice images located in the $n^{th}$ column are obtained by performing the slice processing on the $n^{th}$ column of form.

Optionally, the above information processing device further includes: a control unit for controlling a display interface to display an element input box corresponding to a first slice image, wherein the first slice image is a slice image currently in an entering state; a first processing unit for receiving a character string inputted by a user in the element input box, comparing the character string inputted by the user with that generated by performing the optical character recognition on the first slice image, and issuing a prompt in case of inconsistence of both.

Optionally, the above information processing device further includes a second processing unit for adjusting a display effect of the first slice image such that the display effect of the first slice image is different from that of other slice images after the display interface displaying the element input box corresponding to the first slice image.

Optionally, the above information processing device further includes a third processing unit for receiving a zoom instruction inputted by the user, and performing a corresponding zoom processing on the first slice image in response to the zoom instruction.

As such, the advantageous effects of the present disclosure are as follows.

The information processing method disclosed by the present disclosure firstly determines the position area of each column in the form, determines the position area of the positioning elements of each column in the form, determines the number of elements contained in each column of the form, then determines the position area of each element in the form according to the above information, performs the slice processing according to the position area of each element in the form, such that each element is sliced into one slice image, and then performs the optical character recognition on each slice image to obtain the character string contained in the slice image and record it. Based on the information processing method disclosed in the present disclosure, each element in the form is respectively divided into one slice image, and subsequently the optical character recognition is respectively performed on each slice image, to obtain the character string contained in the slice image. Since one operation of the optical character recognition is only for one element, the slice image may be recognized based on a plurality of data types until the character string contained in the slice image is recognized, which may reduce the error rate of data.

BRIEF DESCRIPTION OF THE DRAWINGS

In order to more clearly explain the embodiments of the present disclosure or the technical solutions of the prior art, the drawings to be used in the descriptions of the embodiments or the prior art are briefly introduced as follows. Obviously, the drawings in the following description are only embodiments of the present disclosure, and the person skilled in the art may further obtain other drawings from these drawings without contributing any creative work.

FIG. 1 is a flow chart of an information processing method disclosed in the present disclosure;
FIG. 2 is a flow chart of another information processing method disclosed in the present disclosure;
FIG. 3 is a structural schematic diagram of an information processing device disclosed in the present disclosure; and
FIG. 4 is a structural schematic diagram of another information processing device disclosed in the present disclosure.

DETAILED DESCRIPTION OF THE EMBODIMENTS

The technical solutions in the embodiments of the present application will be clearly and completely described with reference to the drawings in the embodiments of the present application. Obviously, the described embodiments are just some of the embodiments of the present application rather than all the embodiments. Based on the embodiments of the present application, all the other embodiments obtained by the person skilled in the art without contributing any creative work belong to the protection scope of the present application.

The present disclosure discloses an information processing method for processing elements in a form. This form is a digitized image and may be a scanning copy of the bill or an image obtained by capturing the bill; and the elements in the form are arranged in N columns, N being an integer larger than 1.

Based on the information processing method disclosed in the present disclosure, the elements in the form may be acquired and the error rate of the obtained data is reduced.

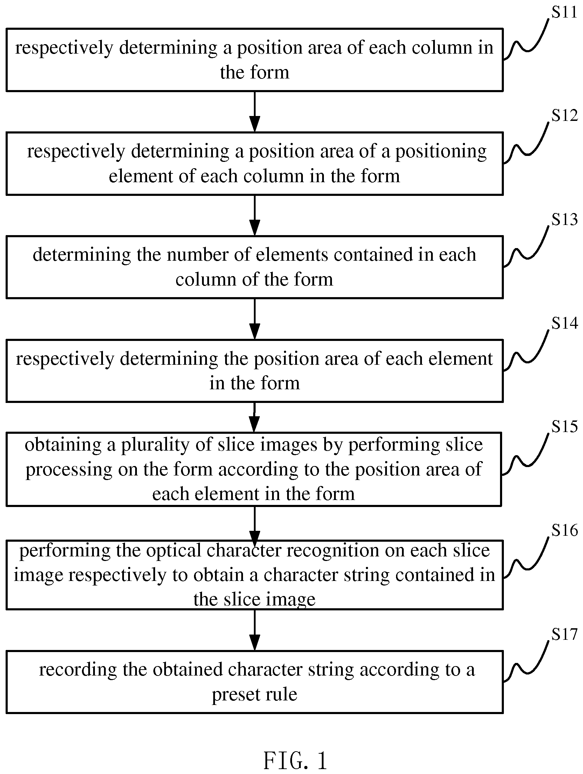

With reference to FIG. 1, FIG. 1 shows a flow chart of an information processing method disclosed in the present disclosure. The information processing method includes steps as follows.

Step S11: respectively determining a position area of each column in the form.

In implementation, the position area of each column in the form may be demarcated by distances between the column and four sides of the form. The user may determine the position area of each column in the form manually and then input the above data to the device running this method. The device running this method may determine the position area of each column in the form by performing measurements by means of the existing ranging software.

Step S12: respectively determining a position area of a positioning element of each column in the form, wherein the positioning element of a $n^{th}$ column is an uppermost side element among the elements necessary to be entered in the $n^{th}$ column, wherein n=1 2, ...N.

In implementation, the position area of the positioning element of each column in the form may be demarcated by distances between a cell where the positioning element is located and four sides of the form. It needs to explain herein that: the cell where the positioning element is located may be visible to the user or invisible to the user (frames of the cell are colorless). The user may determine the position area of the positioning element of each column in the form manually and then may input the above data to the device running this method. The device running this method may determine the position area of the positioning element of each column in the form by performing measurements by means of the existing ranging software.

Step S13: determining the number of elements contained in each column of the form.

Step S14: respectively determining the position area of each element in the form by using the position area of each column in the form, the position area of the positioning element of each column in the form and the number of elements contained in each column.

Taking the $n^{th}$ column in the form as an example, a total height of all elements in the $n^{th}$ column may be determined according to the position area of the $n^{th}$ column in the form and the position area of the positioning element of the $n^{th}$ column in the form. In addition, the number of elements contained in the $n^{th}$ column has been determined, so it may determine an average height of each element in the $n^{th}$ column. Then, according to the position of the positioning element of the $n^{th}$ column and the average height of each element in the $n^{th}$ column, the position area of each element in the $n^{th}$ column in the form may be determined.

Step S15: obtaining a plurality of slice images by performing slice processing on the form according to the position area of each element in the form, wherein each slice image contains one element, the number of the slice images obtained by the slice processing is consistent with that of the elements contained in the form.

After the step S14 is executed, the position area of each element in the form has been determined, the slice processing is performed according to the position area of each element in the form so as to slice each element into one slice image. That is, M slice images are obtained, wherein M is consistent with the number of the elements contained in the form, each slice image containing one element.

Step S16: performing an optical character recognition (OCR) on each of slice images respectively to obtain a character string contained in the slice image.

In the prior art, the intelligent identification is performed on the whole form by using the text recognition tool. Since the elements with plural data types are contained in the form, and are recognized at the same time, the recognition rate is certainly lowered, and the corresponding obtained data is error-prone.

However, in the present disclosure, the optical character recognition is performed on the slice image, and one slice image only contains one element. Since one operation of the optical character recognition is only for one element, the slice images may be recognized based on plural data types, until the character string contained in the slice image is recognized, which may reduce the error rate of data compared to the whole recognition in the prior art.

Step S17: recording the obtained character string according to a preset rule.

In implementation, the obtained character string may be recorded at a specific position of a preset form, wherein the specific position is determined by the position area of the element, which contains the character string, in the form.

The information processing method disclosed by the present disclosure firstly determines the position area of each column in the form, determines the position area of the positioning element of each column in the form, determines the number of elements contained in each column of the form, then determines the position area of each element in the form according to the above information, performs the slice processing according to the position area of each element in the form such that each element is sliced into one slice image, and then performs the optical character recognition on each slice image to obtain the character string contained in the slice image and record it. Based on the information processing method disclosed in the present disclosure, each element in the form is respectively divided into one slice image, and subsequently the optical character recognition is respectively performed on each slice image, to obtain the character string contained in the slice image. Since one operation of the optical character recognition is only for one element, the slice image may be recognized based on a plurality of data types until the character string contained in the slice image is recognized, which may reduce the error rate of data.

In implementation, the position area of the $n^{th}$ column in the form is demarcated by a manner of (a first coordinate value, a second coordinate value, a third coordinate value, a fourth coordinate value), wherein the first coordinate value is a distance between a left side of the $n^{th}$ column and a left side of the form, the second coordinate value is a distance between a top end of the $n^{th}$ column and an upper side of the form, the third coordinate value is a distance between a right side of the $n^{th}$ column and the left side of the form, and the fourth coordinate value is a distance between a bottom end of the $n^{th}$ column and the upper side of the form.

The position area of the positioning element of the $n^{th}$ column in the form is demarcated by a manner of (a fifth coordinate value, a sixth coordinate value, a seventh coordinate value, an eighth coordinate value), wherein the fifth coordinate value is a distance between a left side of the cell where the positioning element of the $n^{th}$ column is located and the left side of the form, the sixth coordinate value is a distance between a top end of the cell where the positioning element of the $n^{th}$ column is located and the upper side of the form, the seventh coordinate value is a distance between a right side of the cell where the positioning element of the $n^{th}$ column is located and the left side of the form, and the eighth coordinate value is a distance between the bottom end of the cell where the positioning element of the $n^{th}$ column is located and the upper side of the form.

Of course, the above is only one manner of demarcating the position area of each column in the form and the position area of the positioning element in each column. In implementation, the first coordinate value to the eighth coordinate value may be further configured as follows:

the first coordinate value is the distance between the left side of the $n^{th}$ column and the left side of the form, the second coordinate value is the distance between the top end of the nth column and the upper side of the form, the third coordinate value is a distance between the right side of the nth column and a right side of the form, and the fourth coordinate value is a distance between the bottom end of the nth column and a lower side of the form; and the fifth coordinate value is the distance between the left side of the cell where the positioning element of the nth column is located and the left side of the form, the sixth coordinate value is the distance between the top end of the cell where the positioning element of the nth column is located and the upper side of the form, the seventh coordinate value is a distance between the right side of the cell where the positioning element of the nth column is located and the right side of the form, and the eighth coordinate value is a distance between the bottom end of the cell where the positioning element of the nth column is located and the lower side of the form.

The process of determining the position area of each element located in the same column in the form is explained with combination to an example.

It is assumed that the position area of the first column in the form is (leftA, TopA, RightA, BottomA), the position area of the positioning element in the first column is (leftA1, TopA1, RightA1, BottomA1), wherein LeftA1 is equal to LeftA, and RightA1 is equal to RightA. The maximum number of the rows in this column is MaxColumn, that is, the number of the elements contained in the first column is MaxColumn.

It may be determined that the height of the elements of the MaxColumn rows in the first column is BottomA-TopA1, an average height "Height" of each element in the first column is (BottomA-TopA1)/MaxColumn. Then, according to the position area of the positioning element of the first column and the average height of each element, the position areas of the elements of the MaxColumn rows in the first column may be determine. Specifically, the position area of the element A1 located in the first column and the first row is

$$(LeftA, TopA1,\ RightA,\ TopA1+Height);$$

the position area of the element A2 located in the first column and the second row is

$$(LeftA, TopA1+Height, RightA, TopA1+2*Height);$$

......;
the position area of the element Amax located in the first column and the (MaxColumn)th row is
(LeftA, TopA1+Height*(MaxColumn-1), RightA, TopA1+Height*MaxColumn).

As a preferable solution, after the position area of each element in a certain column is determined, the position area of each element is marked on the form by a specific color of rectangular frame, for example, the position area of each element is marked on the form by a red dashed rectangular frame.

The user may intuitively judge whether the calculated position area of each element conforms to the practical position area of the element based on the marked rectangular frame. If there is a deviation between the calculated position area of each element and its practical position area, the user may adjust the position area of each column in the form and the position area of the positioning element in each column manually.

Still taking the first column in the form as an example, the position area of the first column is adjusted to (LeftA + $\overline{L}$, TopA + $\overline{T}$, RightA + $\overline{R}$, BottomA + $\overline{B}$), and the position area of the positioning element of the first column is adjusted to (LeftA + $\overline{L}$, TopA1+ $\overline{TA}$, RightA + $\overline{R}$, BottomA1 + $\overline{BA}$), wherein $\overline{L}$ is an adjustment value of the distance between the left side of the first column and the left side of the form, $\overline{T}$ is an adjustment value of the distance between the top end of the first column and the upper side of the form, $\overline{R}$ is an adjustment value of the distance between the right side of the first column and the left side of the form, $\overline{B}$ is an adjustment value of the distance between the bottom end of the first column and the upper side of the form, $TA$ is an adjustment value of the distance between the top end of the cell where the positioning element of the first column is located and the upper side of the form, and $\overline{BA}$ is an adjustment value of the distance between the bottom end of the cell where the positioning element of the first column is located and the upper side of the form.

In this case, the height of the elements of the MaxColumn rows in the first column is BottomA + $\overline{B}$ - TopA1 - $\overline{TA}$, and the average height $\overline{H}$ of each element in the first column is (BottomA + $\overline{B}$ - TopA1 - $\overline{TA}$)/MaxColumn. Then, according to the position area of the positioning element of the first column and the average height of each element, the position areas of the elements of the MaxColumn rows in the first column may be determined. Specifically, the position area of the element A1 located in the first column and the first row is

$$(\text{LeftA} + \overline{L}, \text{TopA1} + \overline{TA}, \text{RightA} + \overline{R}, \text{TopA1} + \overline{TA} + \overline{H});$$

the position area of the element A2 located in the first column and the second row is

$$(\text{LeftA} + \overline{L}, \text{TopA1} + \overline{TA} + \overline{H}, \text{RightA} + \overline{R}, \text{TopA1} + \overline{TA} + \overline{H} * 2);$$

......;

the position area of the element Amax located in the first column and the (MaxColumn)<sup>th</sup> row is

(LeftA + $\overline{L}$, TopA1 + $\overline{TA}$ + $\overline{H}$ * (MaxColumn -1), RightA + $\overline{R}$, TopA1 + $\overline{TA}$ + $\overline{H}$ * MaxColumn).

In the information processing method shown in FIG. 1 of the present disclosure, the optical character recognition is performed on each slice image in the step S16, and the following way is adopted preferably.

The optical character recognition is performed on the slice images located in the same column one by one; and then, the optical character recognition is performed on the slice images located in another column one by one, until the optical character recognition is performed on all the slice images located in all the columns. The slice images located in the n<sup>th</sup> column are obtained by performing the slice processing on the n<sup>th</sup> column of the form.

That is, the optical character recognition is performed on the slice images generated from the elements in the same column one by one. After the optical character recognition on all the slice images of the column is completed, the optical character recognition is performed on the slice images generated from the elements in another column one by one.

Since the data types of the elements located in the same column of the form are the same, even the contents of partial elements located in the same column are the same, the optical character recognitions of the slice images located in the same column are performed collectively, which may effectively control the character recognition range, may improve the recognition rate, and may shorten the time consumed by the recognition operation.

For example, the elements of the name column have the data type of Chinese character. During the process of performing the optical character recognition on the slice images generated from the name column, it only needs to perform the character recognition by the recognition algorithm corresponding to the Chinese character data type.

For example, the elements of the currency amount column have the floating-point data type. During the process of performing the optical character recognition on the slice images generated by the amount of money column, it only needs to perform the character recognition on the recognition algorithm corresponding to the floating-point data type.

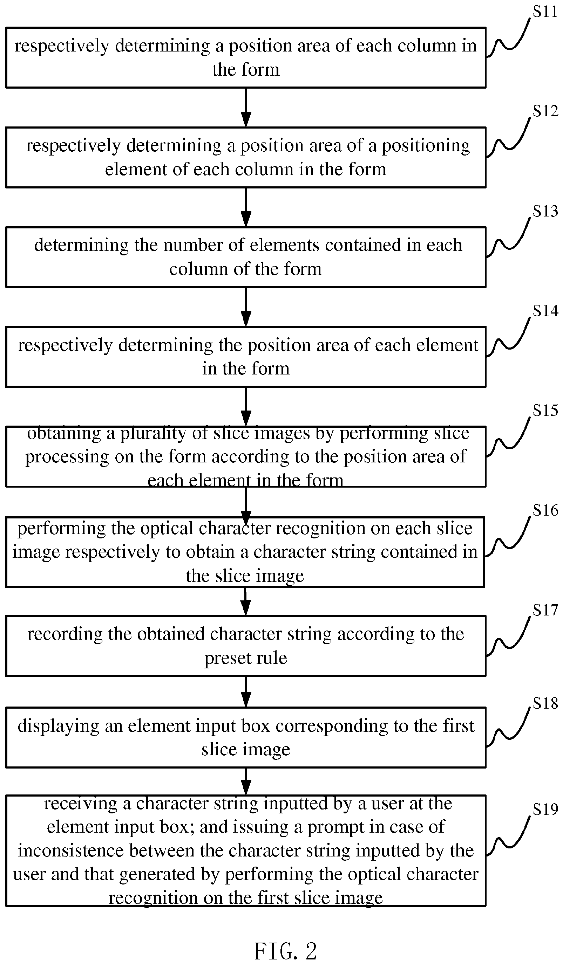

On the basis of the above information processing method disclosed by the present disclosure, the present disclosure further discloses another preferable solution as shown in FIG. 2. After the step S17, the following steps may be set:

step S18: displaying an element input box corresponding to the first slice image; and
step S19: receiving a character string inputted by the user in the element input box; comparing the character string inputted by the user with the character string generated by performing the optical character recognition on the first slice image, and issuing a prompt in case of inconsistence of both.

The first slice image is a slice image currently in an entering state.

Based on the information processing method shown in FIG. 2, the user makes an entry for a certain slice image. The character string inputted by the user is not consistent with that generated by performing the optical character recognition on the slice image, which shows that the character string inputted by the user may have an error, or the recognition of the slice image may have an error, or both have errors. At this time, the prompt is issued to the user so that the user checks it again to ensure that the correct character string is finally entered, which may further reduce the possibility that the error occurs in the entered data, even eliminating the phenomenon of the error occurring in the entered data.

In implementation, the specific way of outputting the prompt may adopt, but not limited to: adjusting a display color of the first slice image or issuing a voice prompt.

Optionally, on the basis of the information processing method shown in FIG. 2, after the element input box corresponding to the first slice image is displayed, the following steps may be set: adjusting a display effect of the first slice image such that the display effect of the first slice image is different from that of other slice images.

During the user makes a manual entry, the slice image on which the user performs the entry operation is adjusted to be displayed in a different effect, so that the user may more intuitionally view the slice image on which the user performs the entry operation among a plurality of slice images.

In consideration of the fact that the form has black characters on a white background in many instances, as one implementation way, a red dash line may be displayed at the peripheral of the first slice image, so that the user may view the first slice image more intuitionally.

In addition, there may exist the problem that the characters in the local area of the form are not clear. In order for the user to conveniently check the area, on the basis of the information processing method shown in FIG. 2, the following steps may be set: receiving a zoom instruction inputted by the user, and performing the corresponding zoom processing on the first slice image in response to the zoom instruction.

Where the characters in the first slice image are not clear, the user may input an zoom-in instruction to control the device to enlarge the first slice image, so that the elements contained in the first slice image may be seen clearly. After the user inputs the character string in the element input box and the character string inputted by the user is consistent with the character string generated by performing the optical character recognition to the first slice image, the user may input a zoom-out instruction to control the device to reduce the first slice image in size so that the first slice image is recovered to an original size.

The present disclosure further discloses an information processing device for processing elements in a form, wherein the form is the digitized image and may be the scanning copy of the bill or the image obtained by capturing the bill; the elements in the form are arranged in N columns, N being an integer larger than 1. The following described contents may correspond or refer to the above described contents regarding the information processing method.

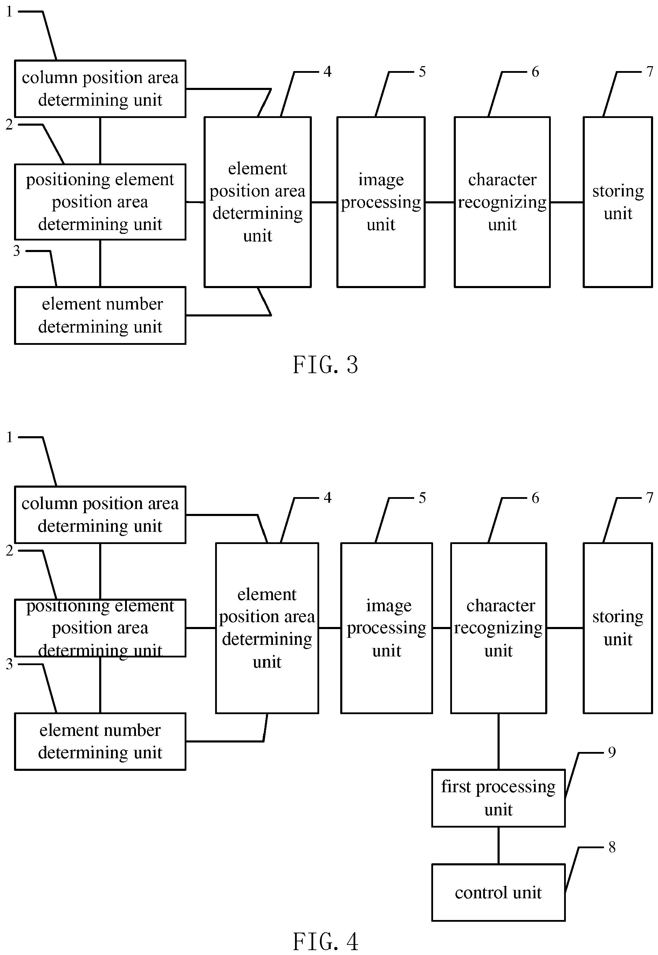

With reference to FIG. 3, FIG. 3 is a structural schematic diagram of an information processing device. The information processing device includes a column position area determining unit 1, a positioning element position area determining unit 2, an element number determining unit 3, an element position area determining unit 4, an image processing unit 5, a character recognizing unit 6 and a storing unit 7.

The column position area determining unit 1 respectively determines the position area of each column in the form.

The positioning element position area determining unit 2 respectively determines the position area of the positioning element of each column in the form, wherein the positioning element of the $n^{th}$ column is the uppermost side element among the elements necessary to be entered in the $n^{th}$ column, wherein n=1, 2, ...N.

The element number determining unit 3 determines the number of elements contained in each column of the form.

The element position area determining unit 4 respectively determines the position area of each element in the form by using the position area of each column in the form, the position area of the positioning elements of each column in the form and the number of elements contained in each column.

The image processing unit 5 obtains a plurality of slice images by performing slice processing on the form according to the position area of each element in the form, wherein each slice image contains one element, the number of the slice images obtained by the slice processing is consistent with that of the elements contained in the form.

The character recognizing unit 6 performs the optical character recognition on the slice images respectively to obtain a character string contained in the slice image.

The storing unit 7 records the obtained character string according to the preset rule.

The information processing device disclosed by the present disclosure firstly determines the position area of each column in the form, determines the position area of the positioning element of each column in the form, determines the number of elements contained in each column of the form, then determines the position area of each element in the form according to the above information, performs the slice processing according to the position area of each element in the form, such that each element is sliced into one slice image, and then performs the optical character recognition on each slice image to obtain the character string contained in the slice image and record it. In the information processing device disclosed in the present disclosure, each element in the form is respectively divided into one slice image, and subsequently the optical character recognition is respectively performed on each slice image so as to obtain the character string contained in the slice image. Since one operation of the optical character recognition is only for one element, the slice image may be recognized based on a plurality of data types until the character string contained in the slice image is recognized, which may reduce the error rate of data.

In implementation, the position area of the $n^{th}$ column in the form is demarcated by a manner of (the first coordinate value, the second coordinate value, the third coordinate value and the fourth coordinate value), wherein the first coordinate value is the distance between the left side of the $n^{th}$ column and the left side of the form, the second coordinate value is the distance between the top end of the $n^{th}$ column and the upper side of the form, the third coordinate value is the distance between the right side of the $n^{th}$ column and the left side of the form, and the fourth coordinate value is the distance between the bottom end of the $n^{th}$ column and the upper side of the form.

The position area of the positioning element of the $n^{th}$ column in the form is demarcated by a manner of (the fifth coordinate value, the sixth coordinate value, the seventh coordinate value and the eighth coordinate value), wherein the fifth coordinate value is the distance between the left side of the cell where the positioning element of the $n^{th}$ column is located and the left side of the form, the sixth coordinate value is the distance between the top end of the cell where the positioning element of the $n^{th}$ column is located and the upper side of the form, the seventh coordinate value is the distance between the right side of the cell where the positioning element of the $n^{th}$ column is located and the left side of the form, and the eighth coordinate value is the distance between the bottom end of the cell where the positioning element of the $n^{th}$ column is located and the upper side of the form.

Of course, the above is only one way of demarcating the position area of each column in the form and the position area of the positioning element in each column. In implementation, the first coordinate value to the eighth coordinate value may be further configured as follows:

the first coordinate value is the distance between the left side of the $n^{th}$ column and the left side of the form, the second coordinate value is the distance between the top end of the $n^{th}$ column and the upper side of the form, the third coordinate value is the distance between the right side of the $n^{th}$ column and the right side of the form, and the fourth coordinate value is the distance between the bottom end of the $n^{th}$ column and the lower side of the form; and the fifth coordinate value is the distance between the left side of the cell where the positioning element of the $n^{th}$ column is located and the left side of the form, the sixth coordinate value is the distance between the top end of the cell where the positioning element of the $n^{th}$ column is located and the upper side of the form, the seventh coordinate value is the distance between the right side of the cell where the positioning element of the $n^{th}$ column is located and the right side of the form, and the eighth coordinate value is the distance between the bottom end of the cell where the positioning element of the $n^{th}$ column is located and the lower side of the form.

As a preferable manner, the character recognizing unit 6 specifically performs the optical character recognition on the slice images located in the same column one by one; and then performing the optical character recognition on the slice images located in another column one by one, until the optical character recognition is performed on all the slice images located in each column. The slice images located in the $n^{th}$ column are obtained by performing the slice processing on the $n^{th}$ column of the form.

That is, the character recognizing unit 6 performs the optical character recognition on the slice images generated from the elements in the same column one by one. After the optical character recognition on all the slice images of the column is completed, the optical character recognition is performed on the slice images generated from the elements in another column one by one.

Since the data types of elements located in the same column in the form are the same, even the contents of some elements located in the same column are the same, the optical character recognitions of the slice images located in the same column are performed collectively, which may effectively control the character recognition range, may improve the recognition rate, and may shorten the time consumed by the recognition operation.

With reference to FIG. 4, FIG. 4 is a structural schematic diagram of another information processing device disclosed in the present disclosure. Compared to the information processing device shown in FIG. 3, the device further includes a control unit 8 and a first processing unit 9.

The control unit 8 controls the display interface to display the element input box corresponding to the first slice image, wherein the first slice image is a slice image currently in the entering state.

The first processing unit 9 receives the character string inputted by the user in the element input box; compares the character string inputted by the user with that generated by performing the optical character recognition on the first slice image, and issues the prompt in case of inconsistence of both.

Compared to the information processing device shown in FIG. 3, in the information processing device shown in FIG. 4, the user may make an entry for a certain slice image. The character string inputted by the user is not consistent with that generated by performing the optical character recognition on the slice image, which shows that the character string inputted by the user may have an error, or the recognition of the slice image may have an error, or both have errors. At this time, the prompt is issued to the user so that the user checks it again to ensure that the correct character string is finally entered, which may further reduce the possibility that the error occurs in the entered data, even eliminating the phenomenon of the error occurring in the entered data.

In implementation, the specific way of outputting the prompt may adopt, but not limited to: adjusting the display color of the first slice image or issuing a voice prompt.

As a preferable solution, on the basis of the information processing device shown in FIG. 4, a second processing unit may be provided. After the element input box corresponding to the first slice image is displayed, the second processing unit adjusts the display effect of the first slice image such that the display effect of the first slice image is different from that of other slice images.

In addition, a third processing unit may be further provided in the above information processing device. The third processing unit receives the zoom instruction inputted by the user, and performing the corresponding zoom processing on the first slice image in response to the zoom instruction.

As understood by persons skilled in the art, the information processing device of each embodiment in the present disclosure may be implemented by a computer including a processor and an optical recognizer, wherein the optical recognizer is configured to perform the optical character recognition on the slice image, and obtain the character string contained in the slice image, thereby implementing the optical recognizing unit 6 in the present disclosure; and the processor is configured to execute the steps except the optical recognizing step in the information processing method of each embodiment in the present disclosure. Alternately, the information processing device may be implemented by a computer including a memory, the optical recognizer and a processor, wherein the memory stores programs so that the processor carries out the steps except the optical recognizing step in the information processing method in the present disclosure by executing the program, in addition to storing the character string obtained by recording according to the preset rule so as to implement the processing unit in the present disclosure.

Finally, it further needs to explain that in the disclosure, the relation term such as the first and the second is only used for differentiating one entity or operation from another entity or operation, instead of necessarily requiring or implying that the entities or operations have such practical relation or order. Moreover, the term "include(s)", "including", "contain(s)", "containing" or its other variants are intended to cover other non-exclusive inclusion, thereby making the process, method, article or device including a series of elements not only include the elements, but also further include other elements not listed explicitly, or include elements inherent in such process, method, article or device. Without more limitations, the element defined by the sentence "including a..." does not exclude additional same element(s) existing in the process, method, article or device including the element.

Each embodiment of the present disclosure is described in a progressive manner, what focuses in each embodiment is different from other embodiments, and it is possible that the same or similar parts between each embodiment refer to each other. As for the devices disclosed in the embodiments, since they correspond to the methods disclosed in the embodiments, the descriptions thereof are relatively simple, and the relevant contents refer to the explanation of the methods.

The above explanation of the disclosed embodiments makes persons skilled in the art realize or use the present application. Various modifications to the embodiments are obvious to persons skilled in the art. The general principles defined herein may be implemented in other embodiments without departing from the spirit or range of the present disclosure. Therefore, the present application is not limited to the embodiments shown herein, but covers the widest range in line with the principles and novelty characteristics disclosed herein.

**Claims**

1. An information processing method for processing elements in a form, the form being a digitized image, the elements in the form arranged in N columns, wherein the element is one piece of data, N is an integer greater than 1, the information processing method comprising:

   respectively determining a position area of each column in the form;
   respectively determining a position area of a positioning element of each column in the form, wherein the positioning element of a $n^{th}$ column is an uppermost side element among the elements necessary to be entered in the $n^{th}$ column, wherein n=1, 2, ...N;
   determining a number of elements contained in each column of the form;
   respectively determining a position area of each element in the form by using the position area of each column in the form, the position area of the positioning element of each column in the form and the number of elements contained in each column;
   obtaining a plurality of slice images by performing slice processing on the form according to the position area of each element in the form, wherein each slice image contains one element, a number of the slice images obtained by the slice processing being consistent with that of the elements contained in the form;
   performing an optical character recognition on the slice images respectively to obtain a character string contained in the slice image; and
   recording the obtained character string according to a preset rule.

2. The method according to claim 1, wherein the performing the optical character recognition on the slice images respectively is specifically to:

   perform the optical character recognition on the slice images located in the same column one by one, and then perform the optical character recognition on the slice images located in another column one by one, until the optical character recognition is performed on all the slice images located in each column;
   wherein the slice images located in the $n^{th}$ column is obtained by performing the slice processing on the $n^{th}$ column of the form.

3. The method according to claim 1 or 2, further comprising:

displaying an element input box corresponding to a first slice image, wherein the first slice image is a slice image currently in an entering state;

receiving a character string inputted by a user in the element input box; comparing the character string inputted by the user with that generated by performing the optical character recognition on the first slice image, and issuing a prompt in case of inconsistence of both.

4. The method according to claim 3, further comprising:

adjusting a display effect of the first slice image such that the display effect of the first slice image is different from that of other slice images after the displaying the element input box corresponding to the first slice image.

5. The method according to claim 4, further comprising:

receiving a zoom instruction inputted by the user, and performing a corresponding zoom processing on the first slice image in response to the zoom instruction.

6. The method according to claim 1, wherein
the position area of the $n^{th}$ column in the form is demarcated by a manner of (a first coordinate value, a second coordinate value, a third coordinate value, a fourth coordinate value), wherein the first coordinate value is a distance between a left side of the $n^{th}$ column and a left side of the form, the second coordinate value is a distance between a top end of the $n^{th}$ column and an upper side of the form, the third coordinate value is a distance between a right side of the $n^{th}$ column and the left side of the form, and the fourth coordinate value is a distance between a bottom end of the $n^{th}$ column and the upper side of the form; and
the position area of the positioning element of the $n^{th}$ column in the form is demarcated by a manner of (a fifth coordinate value, a sixth coordinate value, a seventh coordinate value, an eighth coordinate value), wherein the fifth coordinate value is a distance between a left side of a cell where the positioning element of the $n^{th}$ column is located and the left side of the form, the sixth coordinate value is a distance between a top end of the cell where the positioning element of the $n^{th}$ column is located and the upper side of the form, the seventh coordinate value is a distance between a right side of the cell where the positioning element of the $n^{th}$ column is located and the left side of the form, and the eighth coordinate value is a distance between a bottom end of the cell where the positioning element of the $n^{th}$ column is located and the upper side of the form.

7. An information processing device for processing elements in a form, the form being a digitized image, the elements in the form arranged in N columns, wherein the element is one piece of data, N is an integer greater than 1, the information processing device comprising:

a column position area determining unit for respectively determining a position area of each column in the form;
a positioning element position area determining unit for respectively determining a position area of a positioning element of each column in the form, wherein the positioning element of a $n^{th}$ column is an uppermost side element among the elements necessary to be entered in the $n^{th}$ column, wherein n=1, 2, ...N;
an element number determining unit for determining a number of elements contained in each column of the form;
an element position area determining unit for respectively determining a position area of each element in the form by using the position area of each column in the form, the position area of the positioning elements of each column in the form and the number of elements contained in each column;
an image processing unit for obtaining a plurality of slice images by performing slice processing on the form according to the position area of each element in the form, wherein each slice image contains one element, a number of the slice images obtained by the slice processing being consistent with that of the elements contained in the form;
a character recognizing unit for performing an optical character recognition on the slice images respectively to obtain a character string contained in the slice image; and
a storing unit for recording the obtained character string according to a preset rule.

8. The information processing device according to claim 7, wherein the character recognizing unit is specifically configured to:

perform the optical character recognition on the slice images located in the same column one by one, and then perform the optical character recognition on the slice images located in another column one by one, until the optical character recognition is performed on all the slice images located in each column;

wherein the slice images located in the $n^{th}$ column is obtained by performing the slice processing on the $n^{th}$ column of the form.

9. The information processing device according to claim 7 or 8, further comprising:

a control unit for controlling a display interface to display an element input box corresponding to a first slice image, wherein the first slice image is a slice image currently in an entering state;
a first processing unit for receiving a character string inputted by a user in the element input box, comparing the character string inputted by the user with that generated by performing the optical character recognition on the first slice image, and issuing a prompt in case of inconsistence of both.

10. The information processing device according to claim 9, further comprising a second processing unit for adjusting a display effect of the first slice image such that the display effect of the first slice image is different from that of other slice images after the display interface displaying the element input box corresponding to the first slice image.

11. The information processing device according to claim 10, further comprising a third processing unit for receiving a zoom instruction inputted by the user, and performing a corresponding zoom processing on the first slice image in response to the zoom instruction.

respectively determining a position area of each column in the form — S11

respectively determining a position area of a positioning element of each column in the form — S12

determining the number of elements contained in each column of the form — S13

respectively determining the position area of each element in the form — S14

obtaining a plurality of slice images by performing slice processing on the form according to the position area of each element in the form — S15

performing the optical character recognition on each slice image respectively to obtain a character string contained in the slice image — S16

recording the obtained character string according to a preset rule — S17

FIG. 1

respectively determining a position area of each column in the form ⟍S11

respectively determining a position area of a positioning element of each column in the form ⟍S12

determining the number of elements contained in each column of the form ⟍S13

respectively determining the position area of each element in the form ⟍S14

obtaining a plurality of slice images by performing slice processing on the form according to the position area of each element in the form ⟍S15

performing the optical character recognition on each slice image respectively to obtain a character string contained in the slice image ⟍S16

recording the obtained character string according to the preset rule ⟍S17

displaying an element input box corresponding to the first slice image ⟍S18

receiving a character string inputted by a user at the element input box; and issuing a prompt in case of inconsistence between the character string inputted by the user and that generated by performing the optical character recognition on the first slice image ⟍S19

FIG. 2

| column position area determining unit | | element position area determining unit | image processing unit | character recognizing unit | storing unit |

**FIG. 3**

*(Block diagram FIG. 3: "column position area determining unit" (1), "positioning element position area determining unit" (2), and "element number determining unit" (3) connect to "element position area determining unit" (4), which connects to "image processing unit" (5), "character recognizing unit" (6), and "storing unit" (7).)*

**FIG. 4**

*(Block diagram FIG. 4: "column position area determining unit" (1), "positioning element position area determining unit" (2), and "element number determining unit" (3) connect to "element position area determining unit" (4), which connects to "image processing unit" (5), "character recognizing unit" (6), and "storing unit" (7). The "character recognizing unit" (6) also connects to "first processing unit" (9), which connects to "control unit" (8).)*

# INTERNATIONAL SEARCH REPORT

| International application No. |
| --- |
| **PCT/CN2015/098836** |

## A. CLASSIFICATION OF SUBJECT MATTER

G06K 9/20 (2006.01) i

According to International Patent Classification (IPC) or to both national classification and IPC

## B. FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNKI, CNPAT, WPI, EPODOC: form, receipt, voucher, cut, slice, sheet, table, bill, divid+, recogniz+, position, area

## C. DOCUMENTS CONSIDERED TO BE RELEVANT

| Category* | Citation of document, with indication, where appropriate, of the relevant passages | Relevant to claim No. |
| --- | --- | --- |
| A | CN 1877598 A (INVENTEC (SHANGHAI) ELECTRONICS CO., LTD.), 13 December 2006 (13.12.2006), description, page 2, line 1 to page 4, line 20 | 1-11 |
| A | CN 102156855 A (SUNYARD SYSTEM ENGINEERING CO., LTD.), 17 August 2011 (17.08.2011), the whole document | 1-11 |
| A | CN 102567764 A (INDUSTRIAL AND COMMERCIAL BANK OF CHINA LIMITED), 11 July 2012 (11.07.2012), the whole document | 1-11 |
| A | CN 103020619 A (INTSIG INFORMATION CO., LTD.), 03 April 2013 (03.04.2013), the whole document | 1-11 |

☐ Further documents are listed in the continuation of Box C.     ☒ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 20 July 2016 (20.07.2016) | **10 August 2016 (10.08.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHAO, Xiaomin** Telephone No.: (86-10) **62414041** |
| --- | --- |

Form PCT/ISA/210 (second sheet) (July 2009)

## INTERNATIONAL SEARCH REPORT
Information on patent family members

| International application No. |
| --- |
| **PCT/CN2015/098836** |

| Patent Documents referred in the Report | Publication Date | Patent Family | Publication Date |
| --- | --- | --- | --- |
| CN 1877598 A | 13 December 2006 | None | |
| CN 102156855 A | 17 August 2011 | None | |
| CN 102567764 A | 11 July 2012 | None | |
| CN 103020619 A | 03 April 2013 | WO 2014086287 A1 | 12 June 2014 |

Form PCT/ISA/210 (patent family annex) (July 2009)